# EUROPEAN PATENT APPLICATION

(11) **EP 4 349 524 A1**
(43) Date of publication of application: **10.04.2024**
(21) Application number: 22815364.9
(22) Date of filing: 02.06.2022
(51) Int. Cl.: B23P 15/26, B21D 53/06, F28D 1/047, F28F 9/26

(54) **HEAT EXCHANGER PROCESSING METHOD AND APPARATUS**

(30) Priority: 04.06.2021 CN 202110624568; 11.06.2021 CN 202121317562 U
(71) Applicant: Sanhua (Hangzhou) Micro Channel Heat Exchanger Co. Ltd, Zhejiang 310018 (CN)
(72) Inventor: WANG, Feng, Hangzhou Economic& Technological Development Area Hangzhou, Zhejiang 310018 (CN); JIANG, Jianlong, Hangzhou Economic& Technological Development Area Hangzhou, Zhejiang 310018 (CN); GAO, Qiang, Hangzhou Economic& Technological Development Area Hangzhou, Zhejiang 310018 (CN)
(74) Representative: advotec.
(86) International application number: PCT/CN2022/096922
(87) International publication number: WO 2022/253325

(57) **Abstract**

Disclosed in embodiments of the present application are a heat exchanger processing method and apparatus. The heat exchanger processing method comprises: arranging a plurality of heat exchange tubes at intervals along a first direction; limiting the plurality of heat exchange tubes by means of a limiting apparatus, so as to limit the plurality of heat exchange tubes to move in the first direction; and moving a first tube segment of at least one heat exchange tube along the first direction relative to remaining parts of the heat exchange tube by a preset distance in the first direction, such that the length direction of a part of the first tube segment is at an angle with the length direction of the remaining parts of the heat exchange tube. There may be one or more first tube segments. When the first tube segment of each heat exchange tube moves in the first direction, the second tube segment and the third tube segment located on two sides of the first tube segment in the length direction of the heat exchange tube move toward each other.

## Description

### CROSS-REFERENCE TO RELATED APPLICATIONS

This application claims the priority and benefits of two Chinese patent applications No. 202110624568.0, filed on June 4, 2021, and No. 202121317562.0, filed on June 11, 2021, the entire contents of which are incorporated herein by reference.

### FIELD

The present application relates to the field of heat exchanger manufacturing, in particular to a method and a device for processing a heat exchanger.

### BACKGROUND

In the related art, in the manufacturing process of heat exchanger structures with bending design of a heat exchange tube, it is usually necessary to push the heat exchange tube before bending. When the heat exchange tube is pushed, a middle tube section of the heat exchange tube is deformed, and the stress concentration is prone to occur on the tube section, which affects the reliability of the heat exchange tube and heat exchanger.

### SUMMARY

Embodiments of the present application provide a method for processing a heat exchanger. In the method for processing a heat exchanger, when a heat exchange tube is pushed, a second tube section and a third tube section of the heat exchange tube move towards each other, which is beneficial to reducing stress concentration on the heat exchange tube during processing and improving the reliability of the heat exchange tube.

Embodiments of another aspect of the present application provide a device for processing a heat exchanger.

Embodiments of yet another aspect of the present application provide a heat exchanger.

The method for processing the heat exchanger according to embodiments of the present application includes: arranging a plurality of heat exchange tubes at intervals along a first direction; limiting the plurality of heat exchange tubes by a limiting device, in which the heat exchange tube include a first tube section, a second tube section and a third tube section, a first end of the first tube section is connected with the second tube section, and a second end of the first tube section is connected with the third tube section, and the limiting device limits a movement of the second tube sections and the third tube sections of the plurality of heat exchange tubes the first direction; moving a first tube section of at least one heat exchange tube in the first direction by a preset distance relative to a remaining part of the heat exchange tube, so that a length direction of a partial tube section on the first tube section is at an angle to a length direction of the remaining part of the heat exchange tube, and one or more first tube sections can be provided; moving the second tube section and the third tube section of the heat exchange tube located on two sides of the first tube section in a second direction towards each other while the first tube section of the heat exchange tube moves in the first direction.

In the method according to the embodiments of the present application, the heat exchange tubes are limited by the limiting device, so that when the heat exchange tubes are bent, the dislocation phenomenon of the heat exchange tubes after bending will not occur, and the consistency of an insertion depth of the heat exchange tubes into the first tube is ensured. At the same time, when the heat exchange tube is pushed, the limiting device moves synchronously with the heat exchange tubes, which can effectively reduce a tensile force on the bent part of the heat exchange tube.

In some embodiments, the method further includes: making free ends of the second tube sections aligned in the first direction, making free ends of the third tube sections aligned in the first direction, inserting the free ends of the second tube sections into the first tube, and inserting the free ends of the third tube sections into the second tube.

In some embodiments, the method further includes: welding an installed heat exchange assembly including the heat exchange tubes, the first tube, the second tube and the fin, so that the heat exchange tube is fixedly connected with the first tube and the second tube, and the fin is fixedly connected with the heat exchange tubes.

In some embodiments, the method further includes: bending the heat exchange tube between the first tube and the second tube into a U-shape or a V-shape, in which the first tube section includes a U-shaped or a V-shaped bent part of the heat exchange tube.

A method for processing a heat exchanger according to embodiments of the present application includes:
limiting a heat exchange tube with a predetermined length in its thickness direction, in which the heat exchange tube includes a first tube section, a second tube section and a third tube section, a first end of the first tube section is connected with the second tube section, and a second end of the first tube section is connected with the third tube section, to restrict a movement of the second tube section and the third tube section in the first direction;
moving the first tube section of the heat exchange tube relative to a first end and a second end in the length direction of the heat exchange tube by a preset distance along a first direction, so that a length direction of part of the first tube section is at an angle to a length direction of a remaining part of the heat exchange tube, and moving the second tube section and the third tube section of the heat exchange tube on two sides of the first tube section in a second direction towards each other while the first tube section of the heat exchange tube moves in the first direction; and
arranging a plurality of heat exchange tubes with a same length after completing above steps at intervals along the first direction, connecting first ends of the heat exchange tubes in the length direction with a first tube, and connecting second ends of the heat exchange tubes in the length direction with a second tube, in which the first tube sections of the heat exchange tubes are aligned in a length direction of the first tube.

In some embodiments, the method further includes: placing fins between the second tube sections of two heat exchange tubes adjacent in the first direction, and between the third tube sections of two heat exchange tubes adjacent in the first direction.

In some embodiments, when moving the first tube section in the first direction, moving a plurality of partial tube sections of the first tube section, and moving distances of the partial tube sections in the first direction are different, so that a length direction of each partial tube section on the first tube section is at an angle to the length direction of the remaining part of the heat exchange tube.

In some embodiments, the method further includes: after moving part of the limiting device, placing a fin at a pre-limited position, and arranging no fin between two adjacent first tube sections in the first direction, and welding an installed heat exchange assembly including the heat exchange tubes, the first tube, the second tube and the fin, so that the heat exchange tube is fixedly connected with the first tube and the second tube, and the fin is fixedly connected with the heat exchange tubes.

In some embodiments, the method further includes: bending the heat exchange tube between the first tube and the second tube into a U-shape or a V-shape, and the first tube section includes a U-shaped or a V-shaped bent part of the heat exchange tube.

A device for processing a heat exchanger according to embodiments of a second aspect of the present application includes: a platform, including a limiting member protruding from the platform, in which a plurality of limiting members is provided, and the plurality of limiting members is arranged at intervals along a first direction and arranged at intervals along a second direction; the platform includes a first sub-platform, a second sub-platform and a third sub-platform arranged along the second direction, in which the second sub-platform is located between the first sub-platform and the third sub-platform in the second direction, and the second sub-platform is movable along the first direction; the heat exchanger is a microchannel heat exchanger, and a minimum distance between two adjacent limiting members in the first direction is greater than a thickness of a heat exchange tube of the processed microchannel heat exchanger.

In some embodiments, the platform further includes a groove extending along the second direction, and a plurality of grooves is arranged at intervals along the first direction, and the first sub-platform includes the grooves and/or the second sub-platform includes the grooves.

A device for processing a heat exchanger according to the embodiments of the present application includes: a platform, including a limiting member, and the platform includes a plurality of grooves extending along a second direction, and the plurality of grooves is arranged at intervals along a first direction; the platform includes a first sub-platform, a second sub-platform and a third sub-platform arranged along the second direction, in which the second sub-platform is located between the first sub-platform and the third sub-platform in the second direction; each of the first sub-platform, the second sub-platform and the third sub-platform includes a groove; the second sub-platform is movable along the first direction; the heat exchanger is a microchannel heat exchanger; and a minimum size of the groove in the first direction is greater than a thickness of a heat exchange tube of the processed microchannel heat exchanger.

A device for processing a heat exchanger according to embodiments of the present application includes a second sub-platform, and the second sub-platform includes: a first member; a plurality of second limiting members arranged on the first member and arranged at intervals along a length direction of the first member; when the second sub-platform is in operation, one heat exchange tube may be placed between two adjacent second limiting members in the length direction of the first member, and the length direction of the first member is at an angle to the length direction of the heat exchange tube, and the angle is not zero; in the length direction of the first member, a distance between two adjacent second limiting members is L1, and a width of the second limiting member is B, satisfying: B > 0.2L1.

The device according to embodiments of the present application includes at least one second sub-platform, the second sub-platform includes a first member and a plurality of second limiting members, the plurality of second limiting members is arranged on a plane of the first member at even intervals along the length direction of the first member, and may be inserted between adjacent heat exchange tubes, and the plurality of second limiting members may push the heat exchange tubes by moving the second sub-platform. The device according to embodiments of the present application is beneficial to reducing stress concentration generated when processing the heat exchange tube, improving the strength of the heat exchange tube, and reducing the problem of inconsistent shapes of bent areas.

In some embodiments, the heat exchanger is a microchannel heat exchanger, and the microchannel heat exchanger includes a plurality of heat exchange tubes; and when the second sub-platform is in operation, the heat exchange tube include a first tube section, a second tube section and a third tube section, and the first tube section is located between the second tube section and the third tube section in a length direction of the heat exchange tube; the heat exchanger further includes a first fin and a second fin, in which the first fin is connected with the second tube section, and the second fin is connected with the third tube section; the first tube section is located between the first fin and the second fin in the length direction of the heat exchange tube; a length of the first tube section is A and a distance between two adjacent heat exchange tubes in the length direction of the first member is L2, satisfying: B≤0.7A, and/or L1 ≤ L2.

In some embodiments, a width of the heat exchange tube is Tw, and a height of the second limiting member is H, satisfying: H≥0.25Tw.

In some embodiments, a thickness of the heat exchange tube is t, and a tooth thickness of the second limiting member is T, satisfying: T < L1-t.

In some embodiments, the second limiting member includes a cylindrical part and a truncated cone part, and the truncated cone part is arranged farther from the first member than the cylindrical part.

In some embodiments, the second limiting member includes a first part and a second part arranged along a height direction of the second limiting member, the second part is connected with the first member, the first part is arranged farther from the first member than the second part, a thickness of the first part is T1, a thickness of the second part is T2, and the thickness of the second part is greater than the thickness of the first part.

In some embodiments, a cross section of the second limiting member is elliptical, or an outer contour of the cross section of the second limiting member includes an arc section.

In some embodiments, the device further includes a second assembly, in which the second assembly includes a plurality of spacer parts arranged at intervals along the length direction of the first member, the plurality of spacer parts is arranged at intervals along a width direction of the first member, at least two spacer parts are located on a first side in the width direction of the first member, and at least two spacer parts are located on a second side in the width direction of the first member.

In some embodiments, a plurality of second sub-platforms is provided, and widths of the second limiting members in the plurality of second sub-platforms are B1, B2, B3 ... Bn in sequence, and the widths of the second limiting members in the plurality of second sub-platforms are equal.

In some embodiments, a width of one second limiting member in one second sub-platform is B1, a width of one second limiting member in another second sub-platform is B2, and a length of one second limiting member in yet another second sub-platform is Bn, and a sum of B1, B2 and Bn is less than 0.7A.

A heat exchanger according to embodiments of the present application includes: a first tube and a second tube; and a heat exchange tube, including a first tube section, a second tube section and a third tube section, in which the first tube section is located between the second tube section and the third tube section in a length direction of the heat exchange tube; the second tube section is connected with the first tube; the third tube section is connected with the second tube; a first end of the first tube section is connected with the second tube section; and a second end of the first tube section is connected with the third tube section, and the first tube section includes a bent part, a plurality of heat exchange tubes is provided, and the plurality of bent parts is arranged in a length direction of the first tube, and a gap is defined between two adjacent bent parts in the length direction of the first tube.

### BRIEF DESCRIPTION OF THE DRAWINGS

Fig. 1 is a schematic view of a device for processing a heat exchanger according to an embodiment of the present application.
Fig. 2 is a top view of the device for processing a heat exchanger in Fig. 1.
Fig. 3 is another top view of the device for processing a heat exchanger in Fig. 1.
Fig. 4 is a front view of a device for processing a heat exchanger according to another embodiment of the present application.
Fig. 5 is a front view of a device for processing a heat exchanger according to yet another embodiment of the present application.
Fig. 6 is a schematic view before a heat exchange tube is translated in a method for processing a heat exchanger according to an embodiment of the present application.
Fig. 7 is a schematic view of a translation process of the heat exchange tube in Fig. 6.
Fig. 8 is a schematic view of the heat exchange tube after translation in Fig. 6.
Fig. 9 is a schematic view before a heat exchange tube is translated in a method for processing a heat exchanger according to another embodiment of the present invention.
Fig. 10 is a schematic view of a translation process of the heat exchange tube in Fig. 9.
Fig. 11 is a schematic view before a heat exchange tube is translated in a method for processing a heat exchanger according to yet another embodiment of the present application.
Fig. 12 is a schematic view of a translation process of the heat exchange tube in Fig. 11.
Fig. 13 is a schematic view of a device for processing a heat exchanger inserted between adjacent heat exchange tubes according to an embodiment of the present application.
Fig. 14 is a schematic view of a device for processing a heat exchanger pushing a heat exchange tube according to an embodiment of the present application.
Fig. 15 is a schematic view of a second assembly of a device for processing a heat exchanger according to an embodiment of the present application.
Fig. 16 is a schematic view of a plurality of second sub-platforms in a device for processing a heat exchanger according to an embodiment of the present application.
Fig. 17 is a front view of a device for processing a heat exchanger according to an embodiment of the present application.
Fig. 18 is a side view of a device for processing a heat exchanger according to an embodiment of the present application.
Fig. 19 is a front view of a device for processing a heat exchanger according to another embodiment of the present application.
Fig. 20 is a side view of a device for processing a heat exchanger according to another embodiment of the present application.
Fig. 21 is a side view of a device for processing a heat exchanger according to yet another embodiment of the present application.
Fig. 22 is a front view of a device for processing a heat exchanger according to still yet another embodiment of the present application.
Fig. 23 is a side view of a device for processing a heat exchanger according to still yet another embodiment of the present application.
Fig. 24 is a front view of a device for processing a heat exchanger according to a further embodiment of the present application.
Fig. 25 is a front view of a device for processing a heat exchanger according to yet a further embodiment of the present application.

### Reference numerals:

device 100 for processing a heat exchanger, platform 1, first sub-platform 11, second sub-platform 12, first member 121, third sub-platform 13, limiting member 2, first limiting member 21, second limiting member 22, cylindrical part 31, truncated cone part 32, first part 33, second part 34, limiting device 3, heat exchange tube 201, first tube section 2011, second tube section 2012, third tube section 2013, first tube 41, second tube 42, fin 5, supporting device 6, pushing device 7, second assembly 8, spacer part 81.

### DETAILED DESCRIPTION

Embodiments of the present application will be described in detail below, examples of which are illustrated in the accompanying drawings. The embodiments described below by referring to the attached drawings are illustrative and are intended to explain the present application, but not to be construed as limitations of the present application.

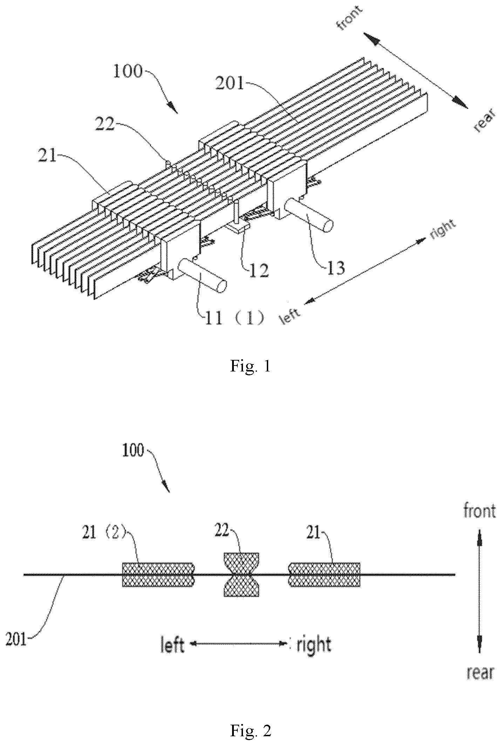

As shown in Fig. 1, a device 100 for processing a heat exchanger according to embodiments of the present application includes a platform 1.

The platform 1 includes a limiting member 2, and the limiting member 2 protrudes from the platform 1. The limiting members 2 are plural and the plurality of the limiting members 2 is arranged at intervals along a first direction (for example, a front-rear direction shown in Fig. 2), and arranged at intervals along a second direction (for example, a left-right direction shown in Fig. 2).

The platform 1 includes a first sub-platform 11, a second sub-platform 12 and a third sub-platform 13 arranged along the second direction. The second sub-platform 12 is located between the first sub-platform 11 and the third sub-platform 13. The first sub-platform 11 and the third sub-platform 13 is movable along the second direction, and the second sub-platform 12 is movable along the first direction. The heat exchanger is a microchannel heat exchanger, and a minimum distance between two adjacent limiting members 2 in the first direction is greater than a thickness of the heat exchange tube 201 of the processed microchannel heat exchanger.

Specifically, as shown in Fig. 1, the platform 1 includes a first sub-platform 11, a second sub-platform 12 and a third sub-platform 13 arranged at intervals in the left-right direction. The platform 1 is provided with a limiting member 2, in which the first sub-platform 11 and the third sub-platform 13 are provided with a first limiting member 21, and the first limiting member 21 is configured to limit the heat exchange tube 201 to fix the heat exchange tube 201 on the platform 1. The second sub-platform 12 is provided with a second limiting member 22, and the second limiting member may be configured to push the heat exchange tube 201. The second sub-platform 12 is movable in the front-rear direction, and the second sub-platform 12 drives the second limiting member 22 to move so that the second limiting member 22 can push the heat exchange tube 201.

As shown in Figs. 1 to 3, a device 100 for processing a heat exchanger according to embodiments of the present application includes a platform 1.

The platform 1 includes a limiting member 2, and the platform 1 includes a plurality of grooves (not shown). The grooves extend along the second direction, and the plurality of grooves is arranged at intervals along the first direction.

The platform 1 includes a first sub-platform 11, a second sub-platform 12 and a third sub-platform 13 arranged along the second direction. The second sub-platform 12 is located between the first sub-platform 11 and the third sub-platform 13. Each of the first sub-platform 11, the second sub-platform 12 and the third sub-platform 13 includes a groove. The first sub-platform 11 and the third sub-platform 13 are movable along the second direction, and the second sub-platform 12 is movable along the first direction. The heat exchanger is a microchannel heat exchanger, and a minimum size of the groove in the first direction is greater than a thickness of the heat exchange tube 201 of the processed microchannel heat exchanger.

It may be understood that the heat exchange tube 201 may be arranged in the groove. In the present application, the heat exchange tube 201 is fixed on the platform 1 through an independent use or a combined action of the limiting member 2 and the groove, so that the stress on the heat exchange tube 201 is more stable during the pushing, and the stress concentration on the heat exchange tube 201 is effectively reduced. In some embodiments, the platform 1 further includes a groove (not shown) extending in the second direction, and a plurality of grooves is arranged at intervals in the first direction, and the first sub-platform 11 includes the grooves and/or the second sub-platform 12 includes the grooves.

It may be understood that the grooves may be provided on the first sub-platform 11 and/or the second sub-platform 12 and/or the third sub-platform 13. Among them, when the first sub-platform 11, the second sub-platform 12 and the third sub-platform 13 are all provided with the grooves, the device 100 for processing a heat exchanger of the present application has the best limiting effect on the heat exchange tubes 201.

It may be understood that a surface of the limiting member 2 in contact with the heat exchange tube 201 may be made of a material with relatively low surface hardness, such as a resin material, to reduce the wear on a surface of the heat exchange tube 201. A surface of the groove that may contact the heat exchange tube 201 may also include a material with relatively low hardness, such as resin, to protect the heat exchange tube 201.

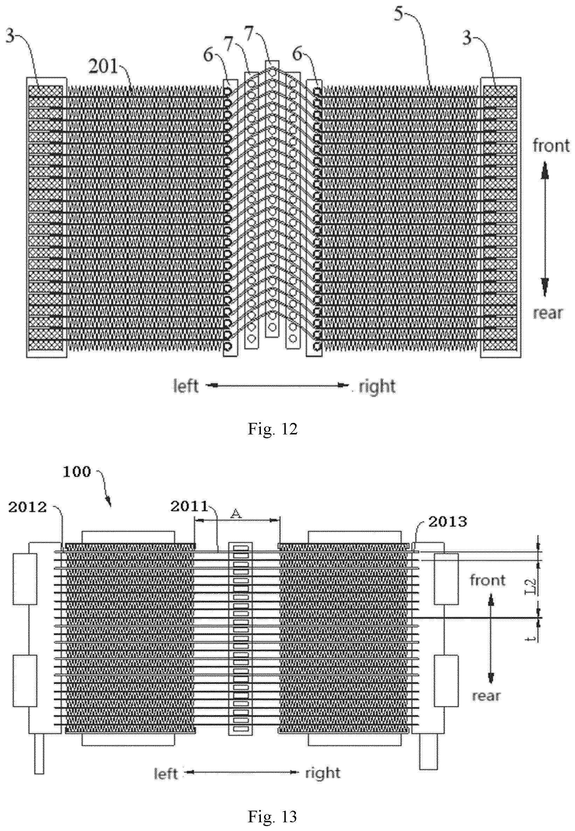

As shown in Figs. 13 to 15, the device 100 for processing a heat exchanger according to embodiments of the present application includes a second sub-platform 12, and the second sub-platform 12 includes a first member 121 and a plurality of second limiting members 22.

The plurality of second limiting members 22 is arranged on the first member 121, and arranged at intervals along a length direction of the first member 121.

The heat exchanger is a microchannel heat exchanger, and the microchannel heat exchanger includes a plurality of heat exchange tubes 201. When the second sub-platform 12 is in operation, one heat exchange tube 201 may be placed between two adjacent second limiting members 22 in the length direction of the first member 121 (for example, the front-rear direction shown in Fig. 1), and the length direction of the first member 121 is at an angle to the length direction of the heat exchange tube 201 (for example, the left-right direction shown in Fig. 1), and the angle is not zero.

In the length direction of the first member 121, a distance between two adjacent second limiting members 22 is L1, and a width of the second limiting member 22 is B, satisfying: B > 0.2L1.

The device 100 for processing a heat exchanger according to embodiments of the present application includes at least one second sub-platform 12, and the second sub-platform 12 includes a first member 121 and a plurality of second limiting members 22. Among them, the first member 121 is generally flat plate, and the plurality of second limiting members 22 is arranged on a plane of the first member 121 at even intervals along the length direction of the first member 121. The plurality of second limiting members 22 may be inserted between adjacent heat exchange tubes 201 in one-to-one correspondence, and moving the second sub-platform 12 can cause the plurality of second limiting members 22 to push the heat exchange tubes 201. The device 100 for processing the heat exchanger according to embodiments of the present application is beneficial to reducing a pushing force when processing the heat exchange tube 201, reducing the stress concentration, improving the strength of the heat exchange tube 201, and reducing the problem of inconsistent shapes of bent areas. The uniform shape of the bent areas of the heat exchanger is beneficial to the subsequent processing and helps to define a gap with a same size between the adjacent heat exchange tubes 201 in a bent area.

As shown in Figs. 13 to 16, a specific implementation process of the device 100 for processing a heat exchanger according to embodiments of the present application is as follows.

The second sub-platform 12 is moved upward from below the heat exchanger, so that the plurality of second limiting members 22 in the second sub-platform 12 are sequentially inserted between adjacent heat exchange tubes 201, in which the second sub-platform 12 extends in the front-rear direction, and the heat exchange tubes 201 extend in the left-right direction, and the length direction of the second sub-platform 12 is generally orthogonal to the length direction of the heat exchange tubes 201.

The second sub-platform 12 is moved from front to rear in the front-rear direction, and the second limiting member 22 gradually abuts on the heat exchange tube 201, and the second limiting member 22 gradually pushes a partial tube section of the heat exchange tube 201 in the front-rear direction, so that the partial tube section is translated by a preset distance relative to a remaining tube section of the heat exchange tube 201.

In some embodiments, as shown in Figs. 13 to 16, when the second sub-platform 12 is in operation, the heat exchange tube 201 includes a first tube section 2011, a second tube section 2012 and a third tube section 2013, and the first tube section 2011 is located between the second tube section 2012 and the third tube section 2013 in the length direction of the heat exchange tube 201.

The heat exchanger further includes a first fin and a second fin, in which the first fin is connected with the second tube section 2012, the second fin is connected with the third tube section 2013, and the first tube section 2011 is located between the first fin and the second fin in the length direction of the heat exchange tube 201.

A length of the first tube section is A, and a distance between two adjacent heat exchange tubes 201 in the length direction of the first member 121 is L2, satisfying: B≤0.7A, and/or L1≤L2.

It may be understood that B, A, L1 and L2 satisfy: B > 0.2L1 and B≤0.7A, or B > 0.2L1 and L1≤L2, or B > 0.2L1, B≤0.7A and L1≤L2. L1≤L2 makes a spacing between adjacent second limiting members 22 substantially consistent with a spacing between adjacent heat exchange tubes 201, so that the second limiting members 22 will not cause damage or friction to the heat exchange tubes 201 when inserted between adjacent heat exchange tubes 201. At the same time, during processing, the heat exchange tube 201 is movable in its length direction to some extent, which reduces excessive deformation of the heat exchange tube 201 in the bent area and is beneficial to improving the reliability of the heat exchange tube 201.

In some embodiments, a width of the heat exchange tube 201 is Tw (not shown) and a height of the second limiting member 22 is H, satisfying: H≥0.25Tw. Therefore, a contact area between the second limiting member 22 and the heat exchange tube 201 is effectively increased, so that a unit pressure on the heat exchange tube 201 becomes smaller, so that the stress on the heat exchange tube 201 is more stable in the translation process, and the heat exchange tube 201 is not easy to twist and slip, and at the same time, the heat exchange tube 201 is prevented from being damaged by the friction of the second limiting member 22.

In some embodiments, as shown in Figs. 13 to 16, a thickness of the heat exchange tube 201 is t, and a tooth thickness of the second limiting member 22 is T, satisfying: T < L1-t. Therefore, it is easier for the second limiting member 22 to be inserted between adjacent heat exchange tubes 201, and the probability of collision between the second limiting member 22 and the heat exchange tubes 201 is effectively reduced.

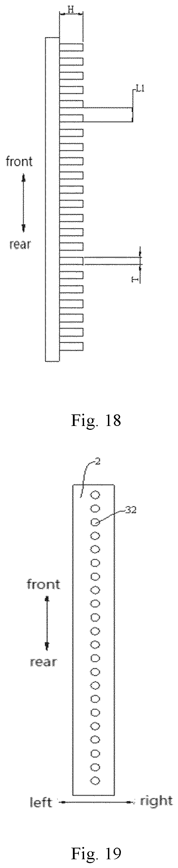

In some embodiments, as shown in Figs. 19 to 21, the second limiting member 22 includes a cylindrical part 31 and a truncated cone part 32, and the truncated cone part 32 is arranged farther from the first member 121 than the cylindrical part 31.

Specifically, as shown in Figs. 19 to 20, the second limiting member 22 is generally cylindrical, and an insertion end of the second limiting member 22 has a truncated cone structure, so that when the second limiting member 22 is inserted between adjacent heat exchange tubes 201, the friction between the truncated cone part 32 of the second limiting member 22 and the heat exchange tubes 201 is smaller, effectively reducing the friction damage of the second limiting member 22 to the heat exchange tubes 201.

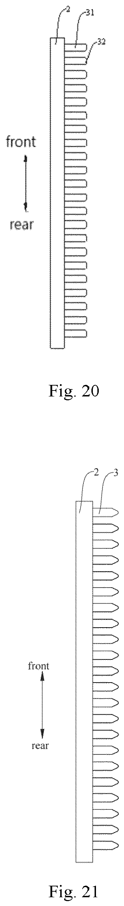

In some embodiments, as shown in Fig. 21, the insertion end of the second limiting member 22 has a cone shape or a truncated cone shape, thereby making it easier for the second limiting member 22 to be inserted between adjacent heat exchange tubes 201. There may be some coatings on the surface of the heat exchange tube 201, such as a hydrophilic coating or anti-corrosion coating. The insertion end of the second limiting member 22 has a cone shape or a truncated cone shape, which can reduce the damage to the coating on the surface of the heat exchange tube 201.

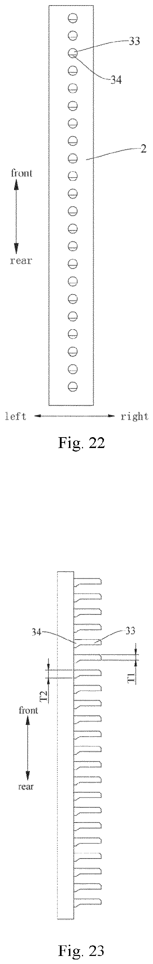

In some embodiments, as shown in Fig. 22 to Fig. 23, the second limiting member 22 includes a first part 33 and a second part 34 arranged along its height direction. The second part 34 is connected with the first member 121, and the first part 33 is arranged farther away from the first member 121 than the second part 34. A thickness of the first part 33 is T1, a thickness of the second part 34 is T2, and the thickness of the second part 34 is greater than the thickness of the first part 33.

It may be understood that T1≤T, thus, the first part 33 of the second limiting member 22 may be normally inserted between adjacent heat exchange tubes 201.

The thickness of the second part 34 is greater than the thickness of the first part 33, which is beneficial to improving the stability of the connection between the second limiting member 22 and the first member 121.

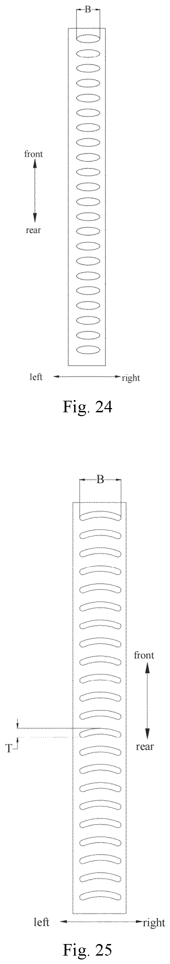

In some embodiments, as shown in Figs. 24 to 25, a cross section of the second limiting member 22 is elliptical, or an outer contour of the cross section of the second limiting member 22 includes an arc section. Therefore, when the second limiting member 22 slides relative to the heat exchange tube 201 during the translation of the heat exchange tube 201, the contact between the second limiting member 22 and the heat exchange tube 201 is smoother, which is beneficial to reducing the friction between the second limiting member 22 and the heat exchange tube 201, protecting the surface of the heat exchange tube 201 and improving the reliability of the heat exchange tube 201.

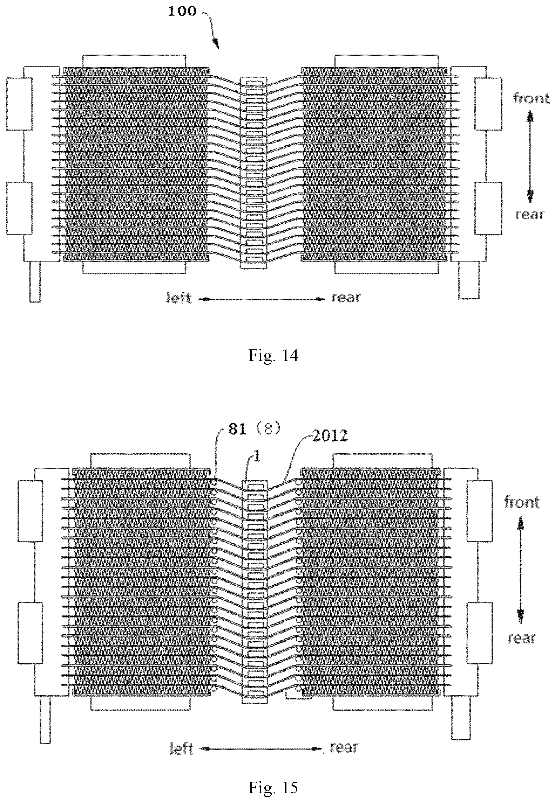

In some embodiments, as shown in Fig. 15, the device 100 for processing a heat exchanger further includes a second assembly 8, the second assembly 8 includes a plurality of spacer parts 81, and the plurality of spacer parts 81 is arranged at intervals along the length direction of the first member 121, and arranged at intervals along the width direction of the first member 121. At least two spacer parts are located on a first side of the first member 121 in the width direction, and at least two spacer parts are located on a second side of the first member 121 in the width direction.

Specifically, as shown in Fig. 15, the plurality of spacer part 81 may be evenly divided into two groups, one group of spacer parts 81 is arranged at a left end of the first tube section 2011, and the other group of spacer parts 81 is arranged at a right end of the first tube section 2011, in which the spacer parts 81 are fixed in the front-rear direction and can move freely in the left-right direction.

During the translation of the heat exchange tube 201, a partial tube section of the first tube section 2011 is translated backward. At this time, the first tube section 2011 will drive the second tube section 2012 and the third tube section 2013 to move, and the first tube section 2011 has a backward pulling force on the second tube section 2012 and the third tube section 2013. Therefore, the plurality of spacer part 81 is arranged at the left end and the right end of the first tube section 2011, which effectively prevents the second tube section 2012 and the third tube section 2013 from moving backward and reduces the deformation of the heat exchange tube 201.

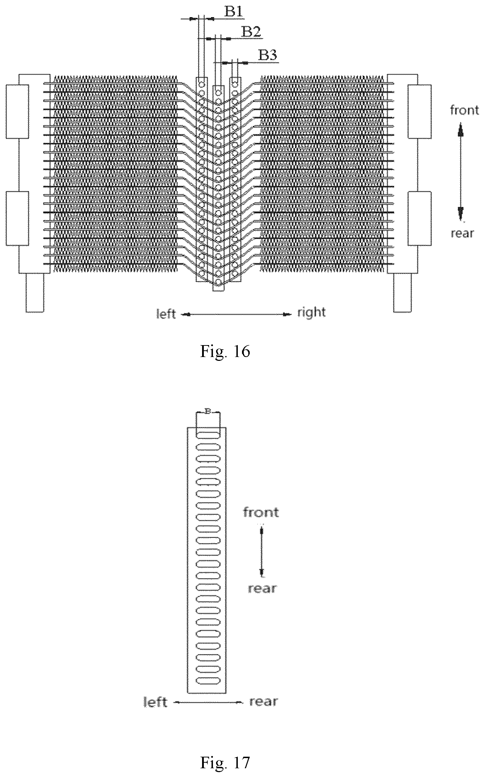

In some embodiments, as shown in Fig. 16, a plurality of second sub-platforms 12 is provided, widths of the second limiting members 22 in the plurality of second sub-platforms 12 are B1, B2, B3 ... Bn in sequence, and the widths of the second limiting members 22 in the plurality of second sub-platforms 12 are equal.

It may be understood that the plurality of second sub-platforms 12 is arranged between the first tube sections 2011 of adjacent heat exchange tubes 201, and all the second sub-platforms 12 can move freely in the front-rear direction, and the displacements of the second sub-platforms 12 are different. Therefore, the device 100 for processing a heat exchanger in embodiments of the present application translates the heat exchange tubes 201 through the plurality of second sub-platforms 12 together, so that the stress on the heat exchange tubes 201 is more uniform, the translation process is more stable, and the subsequent bending of the heat exchange tubes 201 is further facilitated.

In some embodiments, as shown in Fig. 16, the width of one second limiting member 22 in one second sub-platform 12 is B1, the width of one second limiting member 22 in another second sub-platform 12 is B2, the length of one second limiting member 22 in yet another second sub-platform 12 is Bn, and a sum of B1, B2 and Bn is less than 0.7A.

Specifically, as shown in Fig. 16, the device 100 for processing a heat exchanger 100 of embodiments of the present application has three second sub-platforms 12 in total, and the widths of the second limiting members 22 in the three second sub-platforms 12 are B1, B2 and B3 in sequence, and a sum of B1, B2 and B3 is ΣB = B1+B2+B3, and ΣB ≤ 0.7A. It may be understood that the number of the second sub-platforms 12 can also be two, three, four or more, and the sum of the widths of the second limiting members 22 on different second sub-platforms 12 is less than 0.7 times the length of a bent section of the heat exchange tube.

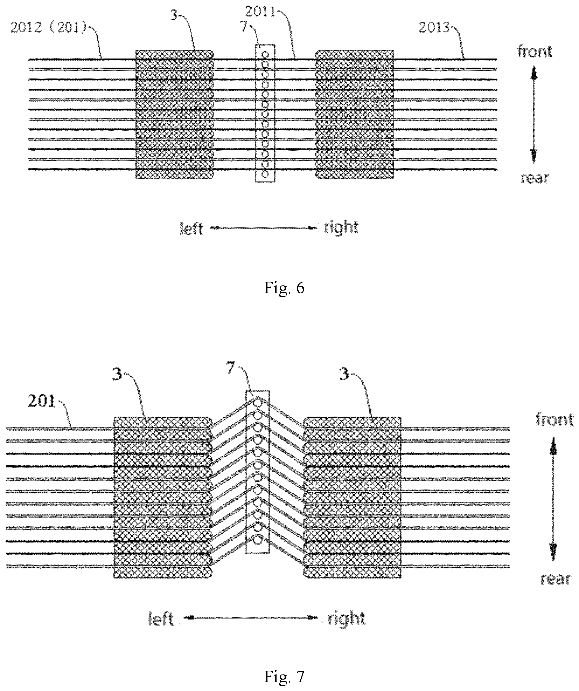

As shown in Figs. 6 to 8, the method for processing a heat exchanger according to embodiments of the present application includes the following steps.

A plurality of heat exchange tubes 201 is arranged at intervals along a first direction (for example, the front-rear direction shown in Fig. 6), and the plurality of heat exchange tubes 201 is limited by a limiting device 3 to limit a movement of the plurality of heat exchange tubes 201 in the first direction.

The first tube section 2011 of at least one heat exchange tube 201 is moved in the first direction by a preset distance relative to a remaining part of the heat exchange tube, so that a length direction of a partial tube section on the first tube section 2011 (for example, the left-right direction shown in Fig. 6) is at an angle to a length direction of the remaining part of the heat exchange tube, and one or more first tube sections 2011 may be provided.

While the first tube section 2011 of the heat exchange tube 201 moves in the first direction, the second tube section 2012 and the third tube section 2013 of the heat exchange tube located at two sides of the first tube section 2011 in a second direction (for example, the left-right direction shown in Fig. 6) are moved towards each other.

In some embodiments, as shown in Figs. 6 to 7, the plurality of heat exchange tubes 201 is arranged at intervals along the front-rear direction, and there are two limiting devices 3. One limiting device 3 is clamped on a left partial tube section of the heat exchange tube 201, the other limiting device 3 is clamped on a right partial tube section of the heat exchange tube 201, and a partial tube section between the two limiting devices 3 is the first tube section 2011 of the heat exchange tube 201.

The first tube section 2011 of at least one heat exchange tube 201 is horizontally moved in the front-rear direction, and the first tube section 2011 protrudes in the front-rear direction relative to other tube sections of the heat exchange tube 201. At the same time, when the first tube section 2011 is translated, the second tube section 2012 and the third tube section 13 of the heat exchange tube 201 are moved towards each other, which is beneficial to reducing stress distribution concentration on the heat exchange tube 201 and improving reliability.

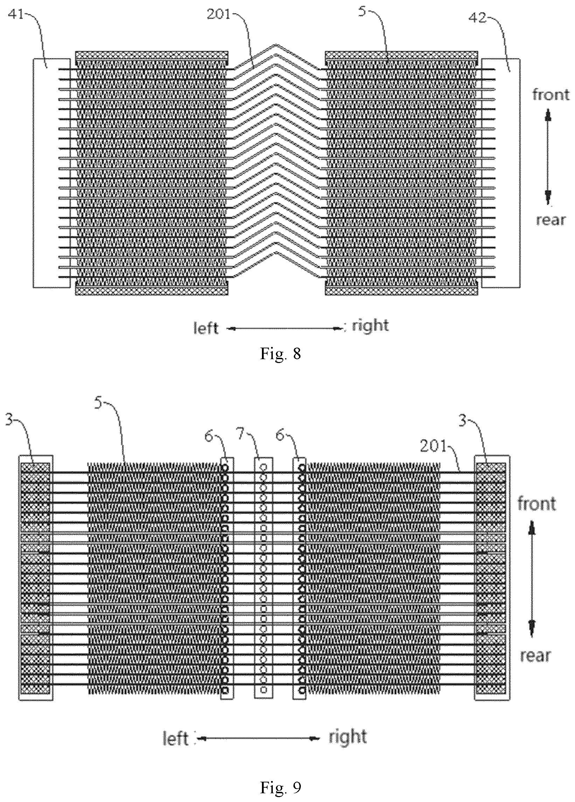

In some embodiments, as shown in Fig. 8, the method for processing a heat exchanger further includes the following steps: free ends of the second tube sections 2012 are aligned in the first direction, free ends of the third tube sections 2013 are aligned in the first direction, the free ends of the second tube sections 2012 are inserted into a first tube 41, and the free ends of the third tube sections 2013 are inserted into a second tube 42.

As shown in Fig. 8, the structures of the plurality of heat exchange tubes 201 are consistent, left ends of the plurality of heat exchange tubes 201 are aligned in the front-rear direction, and right ends of the plurality of heat exchange tubes 201 are also aligned in the front-rear direction, so that when the plurality of heat exchange tubes 201 are connected with the first tube 41 and the second tube 42, the depths of the heat exchange tubes 201 inserting into collecting tubes are consistent.

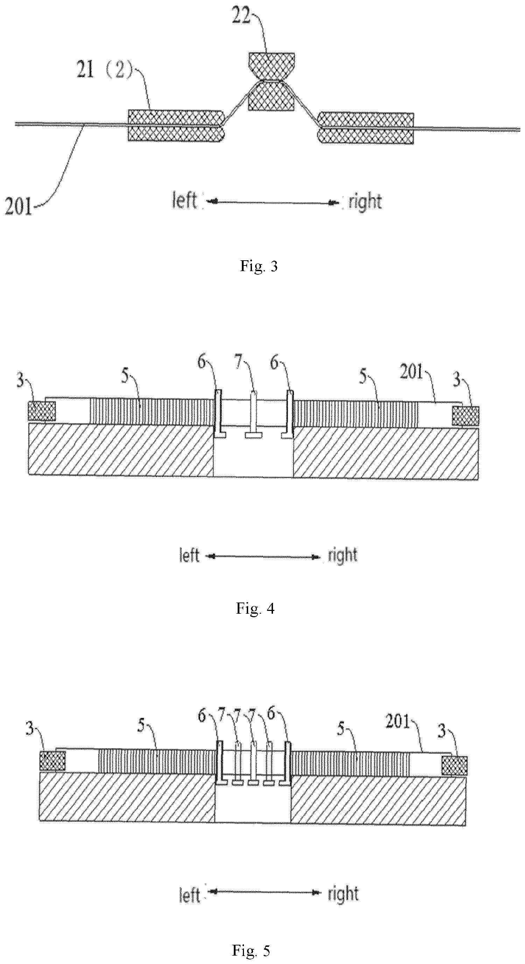

As shown in Figs. 4 to 12, the method for processing a heat exchanger according to embodiments of the present application includes the following steps.

At step 1, a heat exchange tube 201 with a predetermined length is limited in its thickness direction (for example, the front-rear direction shown in Fig. 9), and a movement of the heat exchange tube 201 is restricted or limited in a first direction (for example, the front-rear direction shown in Fig. 9).

At step 2, a first tube section 2011 of the heat exchange tube 201 is moved relative to a first end (for example, the left end of the heat exchange tube 201 in Fig. 9) and a second end (for example, the right end of the heat exchange tube 201 in Fig. 9) in a length direction of the heat exchange tube 201 by a preset distance along the first direction, so that a length direction of part of the first tube section 2011 is at an angle to a length direction of a remaining part of the heat exchange tube 201.

While the first tube section 2011 of the heat exchange tube 201 moves in the first direction, the second tube section 2012 and the third tube section 2013 of the heat exchange tube 201 on two sides of the first tube section 2011 in a second direction (for example, the left-right direction shown in Fig. 9) are moved towards each other.

At step 3, a plurality of heat exchange tubes 201 with the same length after completing the step 2 is arranged at intervals along the first direction, the first ends of the plurality of heat exchange tubes 201 in the length direction are connected with a first tube 41, the second ends of the plurality of heat exchange tubes 201 in the length direction are connected with a second tube 42, and the first tube sections 2011 of the plurality of heat exchange tubes 201 are aligned in a length direction of the first tube 41.

In some embodiments, as shown in Fig. 6 to Fig. 12, the plurality of heat exchange tubes 201 is arranged at intervals along the front-rear direction, and there are two limiting devices 3. One limiting device 3 is clamped on a left partial tube section of the heat exchange tube 201, the other limiting device 3 is clamped on a right partial tube section of the heat exchange tube 201, and a partial tube section between the two limiting devices 3 is the first tube section 2011 of the heat exchange tube 201.

The first tube sections 2011 of the plurality of heat exchange tubes 201 horizontally move in the front-rear direction, and the first tube sections 2011 protrude in the front-rear direction relative to other tube sections of the heat exchange tubes 201. At the same time, when the first tube section 2011 is translated, the second tube section 2012 and the third tube section 13 of the heat exchange tubes 201 are moved towards each other, which is beneficial to reducing stress distribution concentration on the heat exchange tubes 201 and improving reliability. In some embodiments, as shown in Figs. 8 to 12, the method for processing a heat exchanger includes the following steps: placing the fins 5 between the second tube sections 2012 of two heat exchange tubes 201 adjacent in the first direction, and between the third tube sections 2013 of two heat exchange tubes 201 adjacent in the first direction.

It may be understood that in the method for processing a heat exchanger of embodiments of the present application, the fins 5 may be installed between adjacent heat exchange tubes 201 after the heat exchange tubes 201 is pushed, or the fins 5 may be installed between adjacent heat exchange tubes 201 first, and then the heat exchange tubes 201 are translated.

As shown in Figs. 6 to 8, in a specific embodiment of the present application, the heat exchange tubes 201 are moved first, and then the fins 5 are installed between adjacent heat exchange tubes 201.

In some embodiments, as shown in Figs. 9 to 12, one limiting device 3 is clamped on left ends of the plurality of heat exchange tubes 201, and the other limiting device 3 is clamped on right ends of the plurality of heat exchange tubes 201. Fins 5 are arranged between the second tube sections 2012 of adjacent heat exchange tubes 201 and between the third tube sections 2013 of adjacent heat exchange tubes 201, and no fins 5 are arranged between the first tube sections 2011 of adjacent heat exchange tubes 201.

In some embodiments, the method for processing a heat exchanger further includes limiting the displacement of the heat exchange tube 201 by a supporting device 6. There are two supporting devices 6. One supporting device 6 is arranged at a left end of the first tube section 2011, abuts against the first tube section 2011 and is adjacent to the fin 5, and the other supporting device 6 is arranged at a right end of the first tube section 2011, abuts against the first tube section 2011 and is adjacent to the fin 5. When the first tube section 2011 translates in the front-rear direction, the supporting device 6 is fixed in the front-rear direction, and the supporting device 6 can move freely in the left-right direction, so that the fin area of the heat exchange tube 201 cannot be driven when the first tube section 2011 moves, and the fin area of the heat exchange tube 201 will not be deformed along with the first tube section 2011, which improves the surface quality of the heat exchanger in embodiments of the present application and is beneficial to improving the heat exchange performance.

Further, the supporting device 6 is provided with a plurality of supporting shafts, and the supporting shaft abuts against the heat exchange tube 201 and can freely rotate around its axial direction, thereby reducing the friction between the heat exchange tube 201 and the supporting shaft during the movement of the heat exchange tube 201.

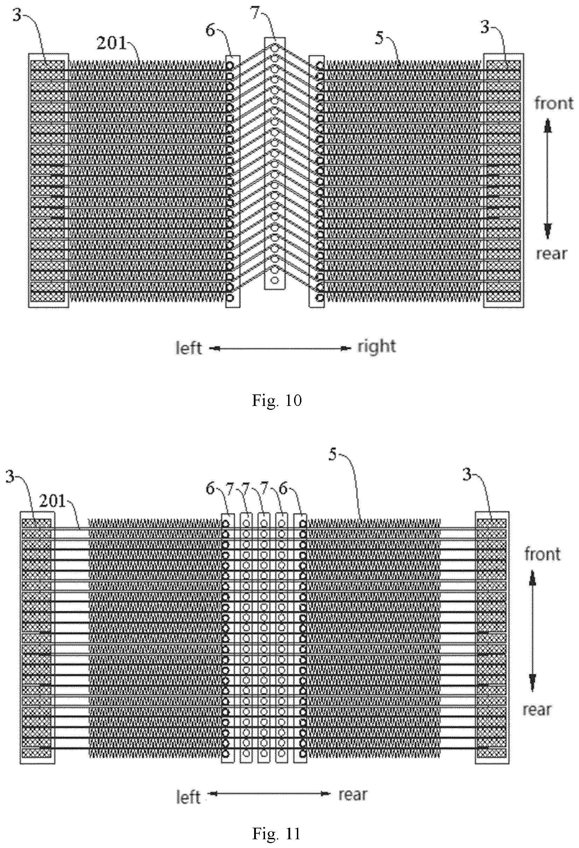

In some embodiments, as shown in Figs. 11 to 12, when moving the first tube section 2011 in the first direction, a plurality of partial tube sections of the first tube section 2011 is moved, and moving distances of the plurality of partial tube sections in the first direction are different, so that a length direction of the partial tube section on the first tube section 2011 is at an angle to a length direction of a remaining part of the heat exchange tube 201.

It may be understood that in the present application, the first tube section 2011 may be pushed by a plurality of pushing devices 7 at the same time. The plurality of pushing devices 7 is arranged at intervals in the left-right direction. In the present application, the first tube section 2011 is pushed by the plurality of pushing devices 7, the unit pressure of the stress point on the first tube section 2011 is reduced, so that the stress on the first tube section 2011 is more reasonable, and the damage to the first tube section 2011 caused by excessive pressure is avoided, compared to the first tube section 2011 being pushed by a single pushing device 7.

In some embodiments, the method for processing a heat exchanger includes the following steps: welding an installed heat exchange assembly including the heat exchange tubes 201, the first tube 41, the second tube 42 and the fin 5 so that the heat exchange tube 201 is fixedly connected with the first tube 41 and the second tube 42, and the fin is fixedly connected to the heat exchange tubs, and bending the heat exchange tube 201 between the first tube 41 and the second tube 42 into a U-shape or a V-shape. The first tube section 2011 includes a U-shaped or V-shaped bent part of the heat exchange tube.

It may be understood that the first tube sections 2011 of the heat exchange tubes 201 are pushed by a preset distance, so that the first tube sections 2011 in the bent area after the heat exchange tubes 201 are bent are spaced apart from each other, which improves the heat exchange efficiency of the heat exchange tube 201, facilitates the cleaning of the bent area of the heat exchange tube 201, and effectively prolongs the service life of the heat exchange tube 201.

Preferably, the translated first tube section 2011 may be U-shaped or V-shaped.

In some embodiments, as shown in Figs. 6 to 8, the method for processing a heat exchanger includes the following steps. After moving part of the limiting device 3, a fin 5 is placed at a pre-limited position, no fin 5 is arranged between two adjacent first tube sections 2011 in the first direction, and the installed heat exchange assembly including the heat exchange tubes 201, the first tube 41, the second tube 42 and the fin 5 is welded so that the heat exchange tubes 201 are fixedly connected with the first tube 41 and the second tube 42, and the fin 5 is fixedly connected with the heat exchange tubes 201. The heat exchange tube 201 between the first tube 41 and the second tube 42 is bent into a U-shaped or V-shaped shape, and the first tube section 2011 includes a U-shaped or V-shaped bent part of the heat exchange tube.

Specifically, as shown in Figs. 6 to 8, after the heat exchange tube 201 is pushed, the left limiting device 3 is translated to the left and the right limiting device 3 is translated to the right in the left-right direction. Preferably, the left limiting device 3 may be clamped on the left end of the heat exchange tube 201, and the right limiting device 3 may be clamped on the right end of the heat exchange tube 201.

The fin 5 is placed between adjacent heat exchange tubes 201, between the second tube sections 2012 of two heat exchange tubes 201 adjacent in the first direction, and between the third tube sections 2013 of two heat exchange tubes 201 adjacent in the first direction.

The heat exchanger according to embodiments of the present application may be manufactured using the method for processing a heat exchanger or the device for processing a heat exchanger according to above embodiments of the present application. As shown in Figs. 6 to 8, the heat exchanger according to embodiments of the present application includes a first tube 41, a second tube 42 and a heat exchange tube 201. The heat exchange tube 201 includes a first tube section 2011, a second tube section 2012 and a third tube section 2013. The first tube section 2011 is located between the second tube section 2012 and the third tube section 2013 in the length direction of the heat exchange tube 201. The second tube section 2012 is connected with the first tube 41, and the third tube section 2013 is connected with the second tube 42. A first end of the first tube section 2011 is connected with the second tube section 2012, and a second end of the first tube section 2011 is connected with the third tube section 2013. The first tube section 2011 includes a bent part. A plurality of heat exchange tubes 201 is provided, a plurality of bent parts is arranged in the length direction of the first tube 41, and a gap is defined between two bent parts adjacent in the length direction of the first tube 41.

The length direction of a partial tube section of the first tube section 2011 (for example, the left-right direction shown in Fig. 6) is at an angle to the length direction of a remaining part of the heat exchange tube 201 (for example, the second tube section 2012 and the third tube section 2013).

The heat exchanger further includes a first fin and a second fin. The first fin is connected with a second tube section 2012, the second fin is connected with a third tube section 2013, and the first tube section 2011 is located between the first fin and the second fin in the length direction of the heat exchange tube 201.

In some embodiments, the heat exchanger is a microchannel heat exchanger including a plurality of heat exchange tubes 201. First ends (e.g., left ends) of the plurality of heat exchange tubes 201 are aligned along the thickness direction (e.g., front-rear direction) of the heat exchange tubes 201, and second ends (e.g., right ends) of the plurality of heat exchange tubes 201 are aligned along the thickness direction (e.g., front-rear direction) of the heat exchange tubes 201.

In the description of the present application, it should be understood that the orientation or positional relationship indicated by the terms "center", "longitudinal", "transverse", "length", "width", "thickness", "up", "down", "front", "rear", "left", "right", "vertical", "horizontal", "top", "bottom", "inner", "outer", "clockwise", "counterclockwise", "axial", "radial" and "circumferential" and the like, is based on the orientation or positional relationship shown in the attached drawings, which is only for the convenience of describing the present application and simplifying the description, and does not indicate or imply that the referred device or element must have a specific orientation, and be constructed and operated in a specific orientation, so it cannot be understood as a limitation of the present application.

In addition, the terms "first" and "second" are only used for purpose of description, and cannot be understood as indicating or implying relative importance or implicitly indicating the number of indicated technical features. Therefore, the feature defined as "first" or "second" may explicitly or implicitly include at least one such feature. In the description of the present application, "a plurality of' means at least two, such as two, three, etc., unless otherwise specifically defined.

In the present application, unless otherwise expressly defined, terms such as "install", "interconnect", "connect", "fix" shall be understood broadly, and may be, for example, fixed connections, detachable connections, or integral connections; may also be mechanical or electrical connections or intercommunication; may also be direct connections or indirect connections via intervening media; may also be inner communications or interactions of two elements. For those skilled in the art, the specific meaning of the above terms in the present application may be understood according to the specific situations.

In the present application, unless otherwise expressly defined and specified, a structure in which a first feature is "on" or "below" a second feature may include the embodiments in which the first feature is in direct contact with the second feature, or may further include the embodiments in which the first feature and the second feature are in indirect contact through intermediate media. Furthermore, a first feature "on", "above", or "on top of' a second feature may include the embodiments in which the first feature is right or obliquely "on", "above", or "on top of' the second feature, or just means that the first feature is at a height higher than that of the second feature, while a first feature "below", "under", or "on bottom of' a second feature may include the embodiments in which the first feature is right or obliquely "below", "under", or "on bottom of' the second feature, or just means that the first feature is at a height lower than that of the second feature.

In the present application, terms such as "one embodiment", "some embodiments", "an example", "a specific example" or "some examples" means that a particular feature, structure, material, or characteristic described in connection with the embodiment or example is included in at least one embodiment or example of the present application. Thus, the appearances of these terms in various places throughout this specification are not necessarily referring to the same embodiment or example of the present application. Furthermore, the particular features, structures, materials, or characteristics may be combined in any suitable manner in one or more embodiments or examples. In addition, without contradiction, those skilled in the art may combine and unite different embodiments or examples or features of the different embodiments or examples described in this specification.

Although the embodiments of the present application have been shown and described above, it may be understood that the above embodiments are illustrative and shall not be understood as limitation to the present application, and changes, modifications, alternatives and variations may be made in the above embodiments within the scope of the present application by those skilled in the art.

## Claims

1. A method for processing a heat exchanger, comprising:
arranging a plurality of heat exchange tubes at intervals along a first direction;
limiting the plurality of heat exchange tubes by a limiting device, wherein the heat exchange tube comprises a first tube section, a second tube section and a third tube section, a first end of the first tube section is connected with the second tube section, and a second end of the first tube section is connected with the third tube section, and the limiting device limits a movement of the second tube sections and the third tube sections of the plurality of heat exchange tubes in the first direction;
moving the first tube section of at least one heat exchange tube in the first direction by a preset distance relative to a remaining part of the heat exchange tube, so that a length direction of a partial tube section on the first tube section is at an angle to a length direction of the remaining part of the heat exchange tube, and one or more first tube sections may be provided; and
moving the second tube section and the third tube section of the heat exchange tube located on two sides of the first tube section in a second direction towards each other while the first tube section of the heat exchange tube moves in the first direction.

2. The method according to claim 1, further comprising: making free ends of the second tube sections aligned in the first direction, making free ends of the third tube sections aligned in the first direction, inserting the free ends of the second tube sections into a first tube, and inserting the free ends of the third tube sections into a second tube.

3. The method according to claim 1 or 2, further comprising: after moving part of the limiting device, placing a fin at a pre-limited position, and arranging no fin between two adjacent first tube sections in the first direction, and welding an installed heat exchange assembly comprising the heat exchange tubes, the first tube, the second tube and the fin, so that the heat exchange tubes are fixedly connected with the first tube and the second tube, and the fin is fixedly connected with the heat exchange tubes.

4. The method according to claim 3, further comprising: bending the heat exchange tube between the first tube and the second tube into a U-shape or a V-shape, wherein the first tube section comprises a U-shaped or a V-shaped bent part of the heat exchange tube.

5. A method for processing a heat exchanger, comprising:
limiting a heat exchange tube with a predetermined length in its thickness direction, wherein the heat exchange tube comprises a first tube section, a second tube section and a third tube section, a first end of the first tube section is connected with the second tube section, and a second end of the first tube section is connected with the third tube section, to restrict a movement of the second tube section and the third tube section in a first direction;
moving the first tube section of the heat exchange tube relative to a first end and a second end in the length direction of the heat exchange tube by a preset distance along a first direction, so that a length direction of part of the first tube section is at an angle to a length direction of a remaining part of the heat exchange tube, and moving the second tube section and the third tube section of the heat exchange tube on two sides of the first tube section in a second direction towards each other while the first tube section of the heat exchange tube moves in the first direction; and
arranging a plurality of heat exchange tubes with a same length after completing above steps at intervals along the first direction, connecting the first ends of the heat exchange tubes in the length direction with a first tube, and connecting the second ends of the heat exchange tubes in the length direction with a second tube, wherein the first tube sections of the plurality of heat exchange tubes are aligned in a length direction of the first tube.

6. The method according to any one of claims 1-5, further comprising: placing fins between the second tube sections of two heat exchange tubes adjacent in the first direction, and between the third tube sections of two heat exchange tubes adjacent in the first direction.

7. The method according to claim 1 or 5, wherein when moving the first tube section in the first direction, moving a plurality of partial tube sections of the first tube section, and moving distances of the partial tube sections in the first direction are different, so that a length direction of each partial tube section on the first tube section is at an angle to the length direction of the remaining part of the heat exchange tube.

8. The method according to claim 7, further comprising: welding an installed heat exchange assembly comprising the heat exchange tubes, the first tube, the second tube and the fins, to fixedly connect the heat exchange tubes with the first tube and the second tube.

9. The method according to claim 8, further comprising: fixedly connecting the fins with the heat exchange tubes, and bending the heat exchange tubes between the first tube and the second tube into a U-shape or a V-shape, and the first tube section comprises a U-shaped or a V-shaped bent part of the heat exchange tube.

10. A device for processing a heat exchanger, comprising:
a platform comprising a limiting member protruding from the platform, wherein a plurality of limiting members is provided, the plurality of limiting members is arranged at intervals along a first direction and arranged at intervals along a second direction;
the platform comprises a first sub-platform, a second sub-platform and a third sub-platform arranged along the second direction, the second sub-platform is located between the first sub-platform and the third sub-platform in the second direction, and the second sub-platform is movable along the first direction; the heat exchanger is a microchannel heat exchanger, and a minimum distance between two adjacent limiting members in the first direction is greater than a thickness of a heat exchange tube of the processed microchannel heat exchanger.

11. The device according to claim 10, wherein the platform further comprises a groove extending along the second direction, and a plurality of grooves is arranged at intervals along the first direction, and the first sub-platform comprises the grooves and/or the second sub-platform comprises the grooves.

12. A device for processing a heat exchanger, comprising:
a platform comprising a limiting member, the platform comprising a plurality of grooves extending along a second direction and arranged at intervals along a first direction;
wherein the platform comprises a first sub-platform, a second sub-platform and a third sub-platform arranged along the second direction, the second sub-platform is located between the first sub-platform and the third sub-platform in the second direction; each of the first sub-platform, the second sub-platform and the third sub-platform comprises a groove; the second sub-platform is movable along the first direction; the heat exchanger is a microchannel heat exchanger; and a minimum size of the groove in the first direction is greater than a thickness of a heat exchange tube of the processed microchannel heat exchanger.

13. A device for processing a heat exchanger, comprising a second sub-platform, the second sub-platform comprising:
a first member;
a plurality of second limiting members arranged on the first member and arranged at intervals along a length direction of the first member;
when the second sub-platform is in operation, one heat exchange tube may be placed between two adjacent second limiting members in the length direction of the first member, and the length direction of the first member is at an angle to a length direction of the heat exchange tube, and the angle is not zero;
in the length direction of the first member, a distance between two adjacent second limiting members is L1, and a width of the second limiting member is B, satisfying: B > 0.2L1.

14. The device according to claim 13, wherein the heat exchanger is a microchannel heat exchanger, and the microchannel heat exchanger comprises a plurality of heat exchange tubes; and when the second sub-platform is in operation, the heat exchange tube comprise a first tube section, a second tube section and a third tube section, and the first tube section is located between the second tube section and the third tube section in a length direction of the heat exchange tube;
the heat exchanger further comprises a first fin and a second fin, wherein the first fin is connected with the second tube section, and the second fin is connected with the third tube section; the first tube section is located between the first fin and the second fin in the length direction of the heat exchange tube; a length of the first tube section is A and a distance between two adjacent heat exchange tubes in the length direction of the first member is L2, satisfying: B≤0.7A, and/or L1 ≤ L2.

15. The device according to claim 14, wherein a width of the heat exchange tube is Tw, and a height of the second limiting member is H, satisfying: H≥0.25Tw.

16. The device according to claim 14, wherein a thickness of the heat exchange tube is t, and a tooth thickness of the second limiting member is T, satisfying: T < L1-t.

17. The device according to any one of claims 13-16, wherein the second limiting member comprises a cylindrical part and a truncated cone part, and the truncated cone part is arranged farther from the first member than the cylindrical part.

18. The device according to any one of claims 13-16, wherein the second limiting member comprises a first part and a second part arranged along a height direction of the second limiting member, the second part is connected with the first member, the first part is arranged farther from the first member than the second part, a thickness of the first part is T1, a thickness of the second part is T2, and the thickness of the second part is greater than the thickness of the first part.

19. The device according to any one of claims 13-16, wherein a cross section of the second limiting member is elliptical, or an outer contour of the cross section of the second limiting member comprises an arc section.

20. The device according to claim 13 or 14, further comprising a second assembly, wherein the second assembly comprises a plurality of spacer parts arranged at intervals along the length direction of the first member, the plurality of spacer parts is arranged at intervals along a width direction of the first member, at least two spacer parts are located on a first side in the width direction of the first member, and at least two spacer parts are located on a second side in the width direction of the first member.

21. The device according to any one of claims 13-20, wherein a width of one second limiting member in one second sub-platform is B1, a width of one second limiting member in another second sub-platform is B2, and a length of one second limiting member in yet another second sub-platform is Bn, and a sum of B1, B2 and Bn is less than 0.7A.

22. The device according to claim 21, wherein a plurality of second sub-platforms are provided, and widths of the second limiting members in the plurality of second sub-platforms are B1, B2, B3 ... Bn in sequence, and the widths of the second limiting members in the plurality of second sub-platforms are equal.

23. A heat exchanger, comprising:
a first tube and a second tube; and
a heat exchange tube, comprising a first tube section, a second tube section and a third tube section, wherein the first tube section is located between the second tube section and the third tube section in a length direction of the heat exchange tube; the second tube section is connected with the first tube; the third tube section is connected with the second tube; a first end of the first tube section is connected with the second tube section; and a second end of the first tube section is connected with the third tube section, and the first tube section comprises a bent part, a plurality of heat exchange tubes is provided, and the plurality of bent parts is arranged in a length direction of the first tube, and a gap is defined between two adjacent bent parts in the length direction of the first tube.
